(19) Europäisches Patentamt / European Patent Office / Office européen des brevets

(11) **EP 3 809 188 A1**

(12) **EUROPEAN PATENT APPLICATION**

(43) Date of publication:
21.04.2021 Bulletin 2021/16

(51) Int Cl.:
**G02B 27/09** (2006.01)       **G02B 27/58** (2006.01)
**G02B 5/04** (2006.01)        **G02B 21/16** (2006.01)

(21) Application number: 20020478.2

(22) Date of filing: 15.10.2020

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.10.2019 RO 201900657**

(71) Applicant: **National Institute for Laser, Plasma and
Radiation
Physics - INFLPR
077125 Magurele (RO)**

(72) Inventors:
• **Craciun, Alexandru**
  **207115 Breasta (RO)**
• **Dascalu, Traian**
  **014335 Bucuresti (RO)**

(54) **OPTICAL SYSTEM FOR GENERATION OF VECTOR BEAMS**

(57)    The invention refers to an optical system consisting of a Quarter Waveplate **1** optical element, a Half Waveplate **2** optical element, a Mode Converter **3a** optical element made of a birefringent-uniaxial crystal, a Spiral Phase Plate **4** optical element, a Polarization Rotator **5** optical element, and an aspherical lens **6** focusing element. The transparent surfaces of the Mode Converter **3a** are conical in shape and the crystal axis is oriented parallel to the symmetry axis of the system. The optical system according to the invention receives an optical beam **7a** with Gaussian transversal distribution and linear polarization that passes through the mentioned components of the invented optical system, from which **1, 2** and **5** changes the polarization state of the beam in a uniform manner, **3a** changes the uniform polarization state of the beam to a spatially variable polarization state and the Gaussian transversal distribution to the annular distribution **7b**, and **4** introduces an optical path difference that changes with the azimuthal angle around the optical axis.

The polarization state induced by this optical system is controlled by the rotation of the Quarter Waveplate **1** and the Half Waveplate **2** around the optical axis. Depending on the polarization state induced by the optical system, after the aspherical lens **6,** the resulted convergent beam **7c** has at the focusing point **8** a doughnut-like transversal distribution with circular symmetry, or a circularly non-symmetric distribution with two lobes, with low intensity along one direction and a higher intensity along the perpendicular direction, these particular distributions being relevant for high-resolution optical STED microscopy. When the invented optical system consists of a Quarter Waveplate **1,** a different version of the Mode Converter **3b,** a Polarization Rotator **5,** and a focusing lens **6,** the polarization state of the initial Gaussian beam is modified such to achieve a beam with top-hat transversal distribution at the focusing point **8,** this shape being of interest in material processing.

## FIG. 1

**Description**

CROSS-REFERENCE TO RELATED APPLICATIONS

This invention is partly disclosed in Non-Patent Document 1 whose content is incorporated herein by reference.

[Non-Patent Document 1] A. Crăciun and T. Dascălu, A method to generate vector beams with adjustable amplitude in the focal plane, Applied Sciences, Vol. 10, No. 10, 2313 (2020). DOI: 10.3390/app10072313

TECHNICAL FIELD

The present invention relates to a beam-shaping optical system, more specifically to a sequence of diffractive and polarization-changing optical components that transform an optical beam with Gaussian transversal distribution and linear polarization to an optical beam with a spatially variable polarization state that will change its shape at the focusing point according to the beam polarization state. The intensity profile of the beam in the focal plane could be (a) circularly symmetric, doughnut-like shaped, or (b) circularly non-symmetric, two-lobes in shape, both of interest for high-resolution microscopy, or with (c) circularly symmetric top-hat like distribution, of importance for material processing. The invention also relates to one of the polarization-changing component, an original optical element that acts as a radially symmetric Quarter-Wave retarder.

BACKGROUND ART

Stimulated emission depletion (STED) is a microscopy technique used in medicine and biology to achieve resolution beyond the diffraction limit. A STED microscope uses two optical beams. The first beam induces fluorescence in a defined region of the sample that is analyzed. The second beam, called depletion beam, which is usually doughnut-like shaped, is superimposed on the first beam and is used to cancel the fluorescence in the region where its intensity is high. The depleted region excludes a small, central region where the intensity of the depletion beam is nearly zero. The volume from which fluorescence is emitted by the investigated sample decreases, resulting in an improved resolution.

Conventional depletion beams are circularly polarized, having a helical wavefront. Such a helical beam can be produced from a beam with Gaussian transversal distribution using a Spiral Phase Plate (SPP) component, a liquid crystal Q-plate component, or several other equivalent optical components. These methods are simple, but they do not offer means to control the beam profile at the point of focus (that is, the focusing point). Also, it is possible to produce a non-circular depletion beam using a phase element with a step-like discontinuity. In all these cases, the beam-shaping element has a preferential axis and needs to be aligned. The realization of a beam with an arbitrary transversal profile is possible using a voltage-controlled Spatial Light Modulator (SLM); however, SLM-s has lower diffraction efficiency in contrast to the previously mentioned components.

The working principle of STED microscopy is disclosed in Patent Document 1. It should be mentioned that at that time, in 1996, the potential of helical beams for depletion was not known.

An example of a state-of-the-art STED microscopy setup and its capabilities are described in Non-Patent Document 2.

Generation of an optical beam with helical wavefront, known as a helical beam or vortex beam, using a multi-level SPP, as well as the fabrication process for this optical component is described in Non-Patent Document 3.

An assembly of two Q-plates that is used to generate optical beams with a spatially variable polarization state (customarily called vector beams) is described in Non-Patent Document 4. This study on the propagation of vector beams demonstrated that the intensity profile in the focal plane (that is, in the far field) changes according to the polarization state of each beam.

Patent Document 2 discloses a device that makes use of a SLM to generate multiple configurations of scalar (i.e., spatially uniform polarized) helical beams.

A top-hat transversal intensity profile is suitable for material processing because a focused beam with this particular shape delivers the energy of the laser beam more efficiently to the material. A method to generate a top-hat beam that uses two aspherical shapes is disclosed in Patent Document 3. According to this, the first aspherical shape redistributes the energy of the beam in order to shape the top-hat beam and subsequently the second aspherical shape collimates the beam.

Non-Patent Document 5 presents a technique that uses a Diffractive Optical Element and a lens to generate a beam with a top-hat profile at a certain distance from the waist of the focused beam. Such a beam was used for thin-film ablation.

Micro-machining of silicon and fused silica with vector beams is demonstrated in Non-Patent Document 6.

A method for generation of an optical beam with radial polarization and annular (i.e., doughnut-like) transversal distribution using a conical prism placed inside a laser resonator is described in Non-Patent Document 7.

The transformation of a Gaussian beam with linear polarization to a doughnut-like beam with either radial or azimuthal polarization is presented in Non-Patent Document 8, using a circular, birefringent optical element composed of eight equal zones that act as a half-wave retarder.

In Patent Document 4 is described a method for the of fabrication space variant polarization converters, via direct laser writing in fused silica, such components being useful for generation of optical beams with radial or azimuthal polarization.

A technique to shape vector beams is demonstrated in Non-Patent Document 9, which relies on the propagation of a divergent nearly-Gaussian beam with spherical wavefront through a uniaxial crystal that is aligned with its axis along the optical axis of the system.

A similar method that uses at input a ring-shaped beam, such a beam is generated with a pair of axicon lenses is described in Non-Patent Document 10.

Non-Patent Document 11 demonstrates the realization of a beam with top-hat like transversal distribution at the focusing point by overlapping a nearly-Gaussian beam and a doughnut-like shaped beam with orthogonal polarization states. These beams were generated using a liquid crystal SLM.

An interferometric device that generates vector beams with an arbitrary intensity profile is presented in Non-Patent Document 12. The incoming beam is split into two beams with orthogonal polarization states. Spatial phase control is done for each of the two beams that later are recombined into a vectorial beam.

In Non-Patent Document 13 is demonstrated that the longitudinal electric field undergoes constructive interference along the optical axis for radially polarized beams resulting in high intensities on the optical axis, while azimuthally polarized beams are purely transverse, and therefore are ideal for STED microscopy.

[Patent Document 1] US 5,731,588 A

[Patent Document 2] US 7,961,371 B2

[Patent Document 3] US 3,476,463 A

[Patent Document 4] US 10,156,669 B2

[Non-Patent Document 2] B. Harke, et al., Resolution scaling in STED microscopy, Optics Express, Vol. 16, No. 6, pp. 4154-4162 (2008). DOI: 10.1364/OE.16.004154

[Non-Patent Document 3] K. Sueda, et al., Laguerre-Gaussian beam generated with a multilevel spiral phase plate for high intensity laser pulses, Optics Express, Vol. 12, No. 15, pp. 3548-3553 (2004). DOI: 10.1364/OPEX.12.003548

[Non-Patent Document 4] J. C. Quiceno-Moreno, et al., Analysis of hybrid vector beams generated with a detuned Q-plate, Applied Sciences, Vol. 10, No. 10, 3427 (2020). DOI: 10.3390/app10103427

[Non-Patent Document 5] G. Raciukaitis, et al., Laser processing by using diffractive optical laser beam shaping technique, Journal of Laser Micro/ Nanoengineering, Vol. 6, No. 1, pp. 37-43 (2011). DOI: 10.2961/jlmn.2011.01.0009

[Non-Patent Document 6] C. Hnatovsky, et al., The role of light-induced nanostructures in femtosecond laser micromachining with vector and scalar pulses, Optics Express, Vol. 21, No. 10, pp. 12651-12656 (2013). DOI: 10.1364/OE.21.012651

[Non-Patent Document 7] Y. Kozawa and S. Sato, Generation of a radially polarized laser beam by use of a conical Brewster prism, Optics Letters, Vol. 30, No. 22, pp. 3063-3065 (2005). DOI: 10.1364/OL.30.003063

[Non-Patent Document 8] G. Machavariani et al., Efficient extracavity generation of radially and azimuthally polarized beams, Optics Letters, Vol. 32, No. 11, pp. 1468-1470 (2007). DOI: 10.1364/OL.32.001468

[Non-Patent Document 9] V. G. Shvedov, et al., Efficient beam converter for the generation of high-power femtosecond vortices, Optics Letters, Vol. 35, No. 15, pp. 2660-2662 (2010). DOI: 10.1364/OL.35.002660

[Non-Patent Document 10] C. Loussert and E. Brasselet, Efficient scalar and vectorial singular beam shaping using homogeneous anisotropic media, Optics Letters, Vol. 35, No. 1, pp. 7-9 (2010). DOI: 10.1364/OL.35.000007

[Non-Patent Document 11] W. Han, et al., Flattop focusing with full Poincare beams under low numerical aperture illumination, Optics Letters, Vol. 36, No. 9, pp. 1605-1607 (2011). DOI: 10.1364/OL.36.001605

[Non-Patent Document 12] S. Liu, et al., Highly efficient generation of arbitrary vector beams with tunable polarization, phase, and amplitude, Photonics Research, Vol. 6, No. 4, pp. 228-233 (2018). DOI: 10.1364/PRJ.6.000228

[Non-Patent Document 13] K. S. Youngworth and T. G. Brown, Focusing of high numerical aperture cylindrical-vector beams, Optics Express, Vol. 7, No 2, pp. 77-87 (2000). DOI: 10.1364/OE.7.000077

## SUMMARY OF THE INVENTION

## PROBLEM TO BE SOLVED BY THE INVENTION

The invented optical system aims to transform a laser beam with linear polarization and Gaussian transversal distribution into a beam that has a spatially variable polarization state and a transversal distribution that can be adjusted at the point where the beam is focused. The First of the Preferred Embodiments realizes a beam with an adjustable profile at the focusing point, which can be either (a) circularly symmetric doughnut-like shaped, with a variable spatial extension, or (b) circularly non-symmetric, two-lobes in shape. The beam polarization state at the focusing point is mostly azimuthal, comprising also regions with elliptical polarization. As a consequence, the beam intensity is zero along the optical axis, thus obtaining a beam for STED microscopy with a variable transversal profile at the focusing point, without using an SLM element. The Second of the Preferred Embodiments realizes a beam with top-hat like transversal distribution at the focusing point and mostly azimuthal polarization. This kind of circularly symmetric beams with top-hat distribution and spatially variable polarization state are helpful to deliver the energy of a laser pulse efficiently to the material, thus producing a more homogeneous ablation trace.

MEANS FOR SOLVING THE PROBLEM

The optical system consists, according to the invention, of a polarization-changing Quarter Waveplate (QWP) optical element; a polarization-changing Half Waveplate (HWP) optical element; an original polarization-changing optical element, herein called Mode Converter (MC), made of a birefringent-uniaxial crystal; a diffractive Spiral Phase Plate (SPP) optical element; a polarization-changing element that rotates the polarization direction of the laser beam, hereinafter referred to as Polarization Rotator (PR); an aspherical lens or a microscope objective for focusing the laser beam. All the components of the optical system and the optical beam are aligned along a common axis, called the optical axis. The polarization-changing components are intersected by the beam in the order QWP - HWP - MC - PR, or HWP - QWP - MC - PR.

The QWP element converts a linearly polarized beam into a circular/ elliptical polarized beam. When the fast axis of the QWP is rotated clockwise from the polarization direction of the incident beam by 45°, the beam becomes right circularly polarized. If the fast axis is rotated counter-clockwise from the polarization direction of the incident beam by 45°, the beam becomes left circularly polarized. If the orientation of the fast axis of the QWP matches the orientation of the electric field in the incident beam (i.e., direction of polarization of the incident beam), the beam passes unaffected through the component. For any other orientation of the QWP fast axis the resulted beam is elliptically polarized, and the major axis of the polarization ellipse is oriented along the fast axis of QWP.

The HWP element rotates the axis of polarization in the case of linear polarization, or the major axis of the ellipse in the case of the elliptical polarization; the HWP also changes the direction of polarization rotation (it turns right circular polarization to left circular polarization, and conversely). The rotation of the polarization direction imposed by the HWP is characterized by an angle $2\gamma$, where $\gamma$ is the angle of rotation of the fast axis of HWP with respect to the direction of polarization/ orientation of the major axis of the polarization ellipse. Thus, the QWP followed by the HWP transforms the linearly polarized beam to an optical beam with arbitrary polarization, which is the same in all of the points of the transversal plane of the beam (i.e., spatially uniform polarization).

The original optical component MC is made of a birefringent-uniaxial crystal cylindrical in shape, having the crystal axis parallel to the optical axis. The first surface of MC is conical and concave (recessed inward to the cylindrical shape), characterized by the angle $\alpha$ between the cone generator and the basal plane. Refraction through this surface modifies the incoming collimated laser beam into a divergent beam with a conical wavefront that is characterized by the angle $\beta$, which can be regarded also as the tilt angle of the light rays refracted from the first surface with respect to the optical axis. Consequently, the angle $\beta$ can be calculated from the law of refraction according to equation (1), where $n_o$ is the value of the ordinary refractive index. Then the beam propagates through the uniaxial material (from which the MC is made), which has the thickness $L$. Subsequently, the laser beam is refracted through the second surface, which is conical and convex (bulging outward), also characterized by the angle $\alpha$ in order to modify the divergent beam again into a collimated beam.

$$\beta = \alpha - \arcsin\left(\frac{\sin\alpha}{n_o}\right) \qquad (1)$$

Birefringent-uniaxial materials (crystals) are known to have a different refractive index depending on the polarization state of the light, as such, the light that is polarized perpendicular on the crystal axis experience the ordinary refractive index $n_o$ while the light polarized along with the crystal axis experience the extraordinary refractive index $n_e$. A ray of light that is tilted at an angle $\beta$ with respect to the crystal axis, which has the direction of polarization included in the plane generated by the crystal axis and the propagation direction, will experience the effective extraordinary refractive index $n_e^{eff}$, which depends on the angle $\beta$, and the values of ordinary refractive index $n_o$ and extraordinary refractive index $n_e$ according to equation (2).

$$\frac{1}{(n_e^{eff})^2} = \frac{\cos^2 \beta}{n_o^2} + \frac{\sin^2 \beta}{n_e^2} \tag{2}$$

Propagation through a piece of uniaxial material introduces a delay between the extraordinary and the ordinary waves that is translated in the phase difference $\varphi$. This phase difference is proportional to the distance of propagation of the rays through the material and the difference ($n_e^{eff}$-$n_o$), and is inverse proportional to the wavelength $\lambda$ of the laser beam. As the rays are tilted with respect to the optical axis and the MC have conical surfaces, the propagation distance of the rays is not $L$, but instead $L \times \cos(\alpha) \times \cos(\alpha-\beta)^{-1}$. The phase difference $\varphi$ is given by equation (3).

$$\varphi = \frac{2\pi}{\lambda} \frac{L \cos \alpha \ (n_e^{eff}-n_o)}{\cos (\alpha - \beta)} \tag{3}$$

The optical component MC can be made of sapphire. For sapphire, $n_e$ is smaller than $n_o$ and thus the fast axis is the extraordinary axis. The MC acts as an axially rotated waveplate (i.e., the fast axis is rotated with the azimuthal angle around the optical axis because of the circular symmetry of MC). The type of waveplate is determined by the value of the phase difference $\varphi$. For example, choosing $\alpha = 7°$ and $L = 9$ mm results in $\varphi = -\pi/2$ for the wavelength $\lambda = 800$ nm, and therefore the MC becomes an axially rotated Quarter Waveplate. By choosing $\alpha = 10°$ and $L = 8.85$ mm, the phase difference is $\varphi = -\pi$ at the same wavelength, and the MC becomes an axially rotated Half Waveplate. Furthermore, by setting $\alpha = 8.5°$ and $L = 9.35$ mm, the phase difference becomes $\varphi = -0.764\pi$.
The Jones matrix associated with the MC for $\varphi = -\pi/2$ is:

$$\mathbf{J}_{-\pi/2} = \begin{pmatrix} 1 + i \cos 2\theta & i \sin 2\theta \\ i \sin 2\theta & 1 - i \cos 2\theta \end{pmatrix} \tag{4}$$

The effect of a MC tuned for $\varphi = -\pi/2$ on the left/ right circular polarization is mathematically described as the matrix multiplication of matrix $\mathbf{J}_{-\pi/2}$ and the Jones vectors for left respectively right circular polarizations. This operation quickly reveals that this version of the MC generates helical modes, which are characterized by a $\theta$ dependent spatial phase, wherein $\theta$ represents the azimuthal angle of rotation around the optical axis. Moreover, the helical modes have a different polarization state from the initial one and carry half of the energy of the beam as shown in equations (5) and (6):

$$\mathbf{J}_{-\pi/2} \begin{pmatrix} 1 \\ -i \end{pmatrix} = i \ e^{-2i\theta} \begin{pmatrix} 1 \\ i \end{pmatrix} + \begin{pmatrix} 1 \\ -i \end{pmatrix} \tag{5}$$

$$\mathbf{J}_{-\pi/2} \begin{pmatrix} 1 \\ i \end{pmatrix} = \begin{pmatrix} 1 \\ i \end{pmatrix} + i \ e^{2i\theta} \begin{pmatrix} 1 \\ -i \end{pmatrix} \tag{6}$$

The effect of the MC on a linearly polarized beam of light is described by equation (7):

$$\mathbf{J}_{-\pi/2} \begin{pmatrix} 1 \\ 0 \end{pmatrix} = \frac{1}{2} \mathbf{J}_{-\pi/2} \left[ \begin{pmatrix} 1 \\ -i \end{pmatrix} + \begin{pmatrix} 1 \\ i \end{pmatrix} \right] = \begin{pmatrix} 1 \\ 0 \end{pmatrix} + \frac{i}{2} e^{-2i\theta} \begin{pmatrix} 1 \\ i \end{pmatrix} + \frac{i}{2} e^{2i\theta} \begin{pmatrix} 1 \\ -i \end{pmatrix} \tag{7}$$

A linearly polarized beam can be regarded as an equally weighted superposition of left/ right circularly polarized modes. Thus the MC transforms a linearly polarized beam into a complex mixture of all modes that would normally result in the interaction with a left/ right circular polarized beam.
The SPP adds an optical path difference that changes azimuthally around the optical axis, thus transforming the wavefront of a collimated laser beam into a helical wavefront. It is possible as well to cancel a helical wavefront, thus transforming a helical beam to a collimated beam. The surface of SPP is spiral in shape, with a stepped appearance, and the difference between the maximum and minimum optical path is a multiple $m$ of the wavelength $\lambda$ for which the SPP is designed. The integer $m$ will be referred to as topological charge (TC) and is connected with the spatial phase of the beam exp($im\theta$). The SPP will change the TC for the incoming beam by $m$. A non-helical beam has $m = 0$.

The PR rotates the direction of polarization of a linearly polarized incident beam or the major semi-axis of the polarization ellipse associated with an incident beam with elliptical polarization, by 45° clockwise regardless of the initial orientation.

According to the First of the Preferred Embodiments, the technical problem of realization of an optical beam with an adjustable profile in the focal plane is solved in the following manner: an optical beam with Gaussian transversal distribution, having linear polarization, passes through the QWP and through the HWP, which both can be rotated around the optical axis, resulting in a beam with the same transversal distribution, having an arbitrary but uniform polarization state; then the optical beam passes through the MC resulting a beam with a slightly different, annular transversal profile, having a spatially variable polarization that depends on the polarization of the incoming beam on the MC, and at this point, the beam can be described as a combination of beams with different TC, namely $m$=-2, 0, and 2, which will be further referred to as modes; then the optical beam passes through the SPP, characterized by the TC $m$= -1, which will decrease the TC of the modes that compose the beam by 1, resulting in a beam with the same polarization state that is composed of modes with the TC of $m$= -3, -1, and 1; then the optical beam passes through the PR that rotates the polarization by 45° clockwise; then the optical beam is delivered to the focal point using an aspherical lens or a microscope objective.

The beam transversal distribution at the focussing point is controlled by the independent rotation of QWP and HWP around the optical axis. The rotation of QWP changes the shape and rotates the beam at the focusing position whereas the rotation of HWP only rotates the beam at this point. The PR is important to enable the beam to be mostly azimuthally polarized at the focusing point, which further allows it to preserve the zero-intensity on the optical axis even when the beam is focused using high NA objectives.

In order to realize an extended doughnut-like shaped beam at the focusing point, it is necessary to have a left circularly polarized beam before the MC, which is tuned to introduce the phase difference $\varphi = -\pi/2$ between extraordinary and ordinary wave. Left circularly polarization can be realized by adjusting the orientation of the fast axis for QWP and HWP. As results from equation (5), the MC converts half of the energy of the left circularly polarized beam into a right circularly polarized mode with the TC of $m$= -2, hereupon half of the energy remains in a non-helical mode with left circular polarization. The summation of these two modes generates a beam with linear polarization, for which the polarization direction is rotated 45° counter-clockwise with respect to the radial direction. Furthermore, the SPP decreases the TC for both left and right circularly polarized modes by 1, resulting in a combination of left circularly polarized mode with the TC of $m$= -1 and a right circularly polarized mode with the TC of $m$= -3, and the PR rotates the direction of polarization 45° clockwise. At this point, the beam is radially polarized. Afterwards, the beam is brought to focus, which caused the state of polarization to become partly azimuthal and partly elliptical. This phenomenon is caused by the accumulation of a phase difference of value $\pi$ between the two modes due to the propagation to the far-field. It is known that higher-order modes accumulate a larger amount of overall phase, customarily known as Gouy phase when passes through the waist in comparison to a Gaussian beam. For instance, for the Gauss-Laguerre resonator modes, the Gouy phase changes with an amount of $\pi/2$ per a variation with 1 of the absolute value of TC (called azimuthal index in this particular case) when the beam propagates from the lens to the focusing point. If the intensities of the two modes are equal, this phase difference causes a rotation of the direction of polarization by 90°; otherwise, the polarization will be elliptical with the major semi-axis oriented azimuthally (which means that it is also rotated by 90°). The mode having the TC $m$= -1 will be focused closer to the optical axis compared to the mode with TC of $m$= -3. Thus the beam dimension at the focusing point will be extended compared to a typical STED depletion beam due to the influence of the mode with TC of $m$= -3, and the polarization state will be only partially azimuthal.

Starting from the previous example, a typical, less-extended beam at the point of focus with a pure azimuthal polarization can be realized by a rotation with 90° of QWP, which will result in a right circularly polarized beam before the MC instead of a left polarized beam. As results from equation (6), the MC converts half of the energy of the right circularly polarized beam into a left circularly polarized mode with the TC of $m$= 2, while half of the energy remains in a non-helical mode with right circular polarization. The SPP decreases TC for both the left and the right circularly polarized modes by 1, resulting in a combination of a left circularly polarized mode having the TC of $m$= 1 and a right circularly polarized mode with the TC of $m$= -1. After PR the polarization state of the beam becomes azimuthal and it is preserved in the focal plane as the two composing modes accumulate the same amount of Gouy phase.

As another example, according to the First of the Preferred Embodiments, the realization of a beam with two lobes at the focusing point is possible by orienting the QWP with the fast axis along the polarization direction of the incoming beam. In this particular case, the beam is linearly polarized after the QWP, and the HWP will further rotate the polarization of the beam. The rest of the system is circularly symmetric, and the only element that breaks the circular symmetry is the polarization of the beam. Therefore it is clear, from symmetry principles only, that the rotation of the polarization will cause the rotation of the beam distribution at the focusing point. Before the MC the beam is linearly polarized; as results from equation (7), the MC converts a quarter of the energy of the beam into a right circularly polarized mode having a TC of $m$= -2 and a quarter of the energy of the beam into a left circularly polarized mode with TC of $m$= 2. Half of the energy is preserved in a linearly polarized non-helical mode ($m$= 0). After passing through the SPP and the PR the beam comprises three overlapping modes, having the TC of $m$= -3, -1, and 1, polarization states right circular/ linear/ left circular and carrying 25%/ 50%/ 25% of the beam energy, respectively; these three modes are brought to focus. The interference of the constitutive modes causes a change of the beam transversal distribution at the focusing point. This distribution is different from that found in the plane of the lens, in the sense that it lacks in circular symmetry because the mode with $m$= -3 has acquired an amount $\pi$ of Gouy phase.

Another purpose of the present invention relates to the realization of a beam with a transversal distribution that is uniform at the focusing point (top-hat like). The optical layout consists, according to the Second of the Preferred Embodiments, of a QWP, a MC tuned for $\varphi$= -0.764$\pi$, a PR, and a focusing element. The technical problem is solved in the following manner: an optical beam with Gaussian transversal distribution, having linear polarization, passes through the QWP and becomes circularly polarized while preserving the initial transversal distribution; then the beam passes through the MC resulting in a beam with an annular transversal profile, the polarization state being elliptical with the major semi-axis rotated 45° counter-clockwise from radial direction; then the beam passes through the PR that aligns the polarization ellipse with the major semi-axis along the radial direction without changing the transversal distribution; then the beam is focused and the transversal profile becomes top-hat like. The beam is composed of two modes with TC of $m$= -2 and 0 and with the energy ratio around 85:15. The maximum of intensity for the non-helical mode is on the optical axis; conversely, the helical mode has zero intensity along the optical axis. The polarization state becomes a mixture of azimuthal polarization and elliptical polarization with the major semi-axis oriented azimuthally. If the MC is tuned for $\varphi$= -$\pi$/2, the energy ratio between the two modes is 50:50; in this case, the maximum intensity of the helical mode would be much lower than that of the non-helical mode, as the helical mode energy would be distributed on a larger surface.

EFFECT OF THE INVENTION

An optical system according to this invention is capable to transform a linearly polarized beam with Gaussian transversal distribution into either (1) a beam with an adjustable distribution with zero intensity along the optical axis (center of the beam), or (2) a circularly symmetric beam with top-hat distribution, these special distributions being delivered in the focal plane. In the first case of the above (1), the transversal distribution could be changed between (a) a circularly symmetric, doughnut-like shaped and (b) a circularly non-symmetric, two-lobes in shape distribution with low intensity along one axis, and a higher intensity along the perpendicular axis, and also comprising intermediate configurations with variable spatial extension. These beams are expected to be useful for applications such as STED microscopy (1) or material processing (2).

BRIEF DESCRIPTION OF THE DRAWINGS

FIG. 1 shows a schematic layout to illustrate the First of the Preferred Embodiments of the present invention, which is designed to deliver at the focusing point a beam with an adjustable transversal profile and zero-intensity on the optical axis.

FIG. 2 is a schematic layout to illustrate the Second of the Preferred Embodiments of the present invention, which is designed to deliver at the focusing point a beam with a top-hat like transversal distribution and spatially variable polarization state.

FIG. 3 is a longitudinal section view through an embodiment of a MC made of a single piece of material.

FIG. 4 is a perspective view of the SPP element with structured output surface that is incorporated in the First of the Preferred Embodiments of the present invention.

FIG. 5 illustrates the characteristics of the initial beam: (A) the linear polarization; (B) the Gaussian transversal distribution.

FIG. 6 illustrates the polarization state of the optical beam: (A) after passing through the QWP; (B) after passing through the HWP; (C) after passing through the MC; (D) after passing through the PR; (E) in the focal plane of the focusing element and (F) the beam transversal distribution at the focusing point, corresponding to the First of the Preferred Embodiments considering that the QWP is rotated in such a way that it transforms the incoming polarization state to right circular polarization.

FIG. 7 presents the polarization state of the optical beam: (A) after passing through the QWP; (B) after passing through the HWP; (C) after passing through the MC; (D) after passing through the PR; (E) in the focal plane of the focusing element and (F) the beam transversal distribution at the focusing point, corresponding to the First of the Preferred Embodiments considering that fast axis of the QWP matches the direction of polarization of the initial beam.

FIG. 8 illustrates the polarization state of the optical beam: (A) after passing through the QWP; (B) after passing through the MC; (C) after passing through the RP; (D) in the focal plane of the focusing element and (E) the beam transversal distribution at the focusing point, corresponding to the Second of the Preferred Embodiments considering that the QWP is rotated in such a way that it would transform the linear polarization of the beam to right circular polarization.

FIG. 9 (A) shows a longitudinal section view through an MC made of three distinct optical elements that are placed in direct contact is shown. (B) shows a longitudinal section view through an MC made of three distinct optical elements that are positioned at a certain distance from each other;

FIG. 10 illustrates the embodiment of an MC made from a flat mirror with a hole in the middle, a converging axicon, a uniaxial crystal, and a flat mirror.

DETAILED DESCRIPTION OF THE PREFERRED EMBODIMENTS

Two different ways for carrying out the invention are described in the following, and there are two configurations presented for the First Embodiment, which are differentiated by the rotation of one of the components with 45° around the optical axis. It should be noted, however, that multiple intermediate configurations are possible, determined by distinct rotations of certain components around the optical axis, which are also the object of the present invention.

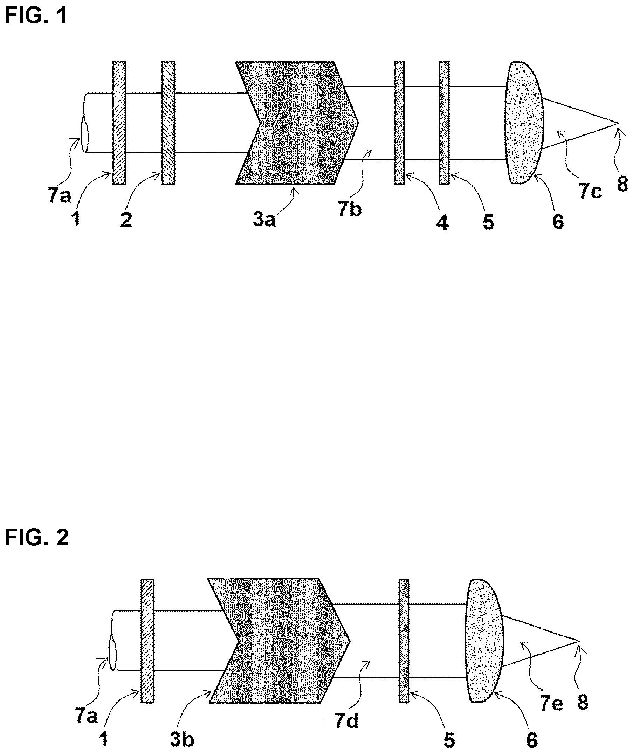

The First of the Preferred Embodiments, illustrated in FIG. 1, is an optical system devised to deliver, at the focusing point, a beam with adjustable transversal distribution and zero-intensity on the optical axis, of interest for STED microscopy, the system consists of a Quarter Waveplate QWP **1,** a Half Waveplate HWP **2,** a Mode Converter MC **3a,** a Spiral Phase Plate SPP **4,** a Polarization Rotator PR **5,** and a focusing lens **6.** The initial laser beam **7a** propagates through the optical system and is delivered to the focusing point **8.** The beam transversal distribution at the focusing point is controlled, depending on the changes in the polarization state that are imposed by the system.

The optical layout for the Second of the Preferred Embodiments is illustrated in FIG. 2. This arrangement delivers a beam with top-hat like transversal distribution at the focusing point, thus of interest for material processing, and for this purpose is composed of a Quarter Waveplate QWP **1,** a Mode Converter MC **3b,** a Polarization Rotator PR **5,** and a focusing lens **6.**

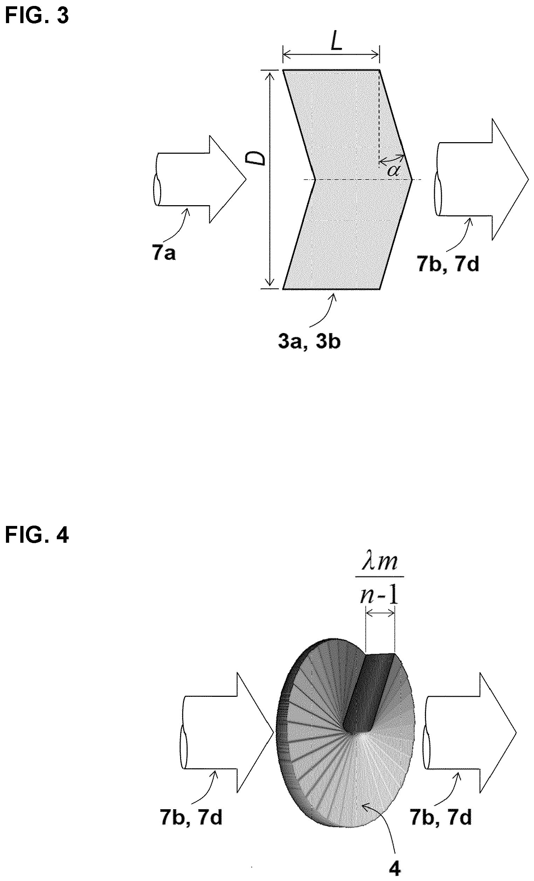

The Mode Converter MC **3a, 3b,** which is illustrated in FIG. 3, is made of a birefringent material, having a cylindrical shape of length *L* and diameter *D,* with the left surface, through which the beam enters, concave conical-shaped and with the right surface, through which the beam exits, also conical in shape but convex, the angle between the cone generator and the basal plane being $\alpha$.

The SPP has a variable thickness, with a flat surface on the left side, through which the beam enters, and a spiral surface on the right side **4** FIG. 4, having the aspect of a circular staircase, through which the beam leaves the SPP.

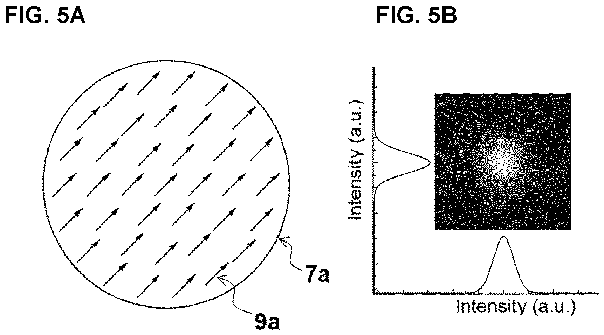

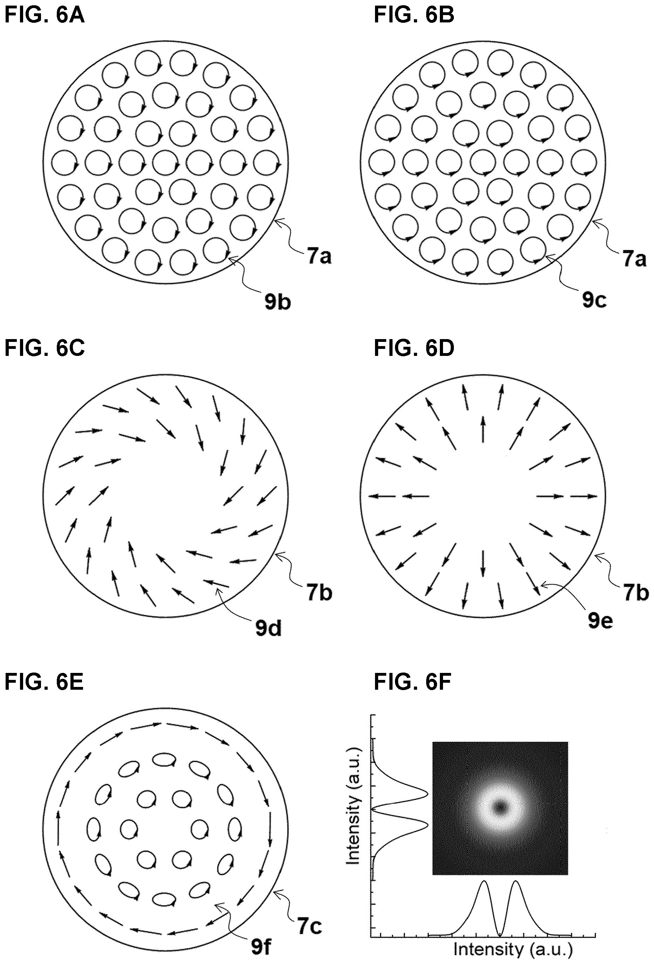

According to the First Embodiment of the present invention the incident beam **7a** FIG. 1, which has linear polarization **9a** FIG. 5A and Gaussian transversal distribution FIG. 5B, is sent through the QWP **1** Fig 1 that changes its polarization to the right circular polarization **9b** FIG. 6A; the beam propagates through the HWP **2** FIG. 1, resulting in a left circular polarized beam **9c** FIG. 6B; which further passes through the MC **3a** FIG. 1 resulting in a beam **7b** FIG. 1 that has an annular-type transversal distribution and has the polarization state **9d** FIG. 6C; then the beam propagates through the SPP **4** FIG. 1 that adds an optical path difference without influencing the polarization state; then the beam passes through the PR **5** FIG. 1 that changes the polarization of the beam into radial polarization **9e** FIG. 6D; afterward the beam passes through lens **6** FIG. 1 and changes to a convergent beam **7c** FIG. 1, achieving the polarization state **9f** FIG. 6E and having a transversal distribution FIG. 6F that is doughnut-like shaped at the focusing point.

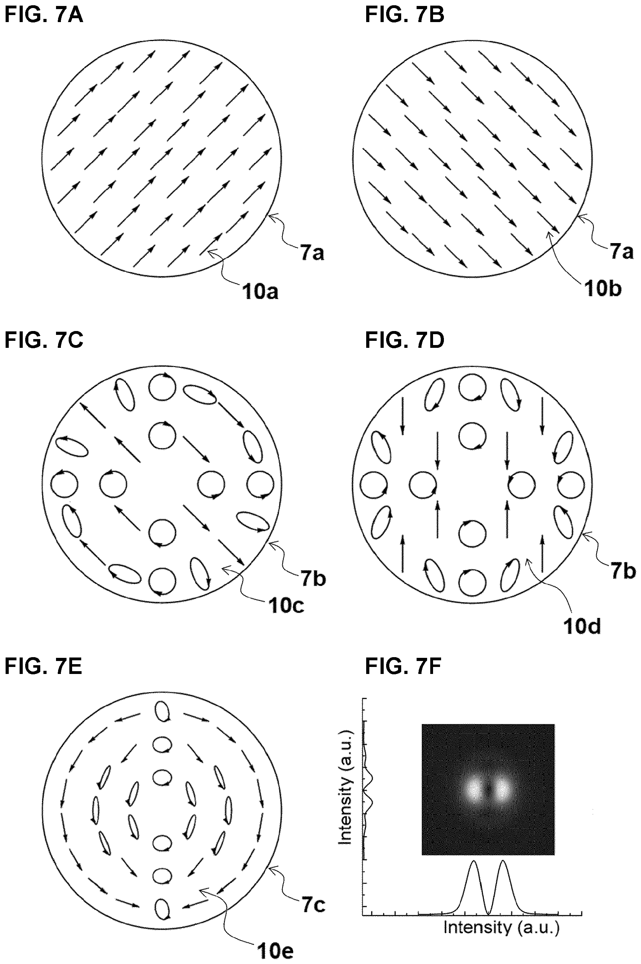

In another configuration of the First Embodiment of the invention, the initial beam **7a** passes through the QWP **1** FIG. 1 that has a specific orientation of the fast axis to preserve the polarization state **10a** FIG. 7A of the beam; then the beam propagates through the HWP **2** FIG. 1 and the linear polarization is rotated by 90° **10b** FIG. 7B; after propagation through the MC **3a** FIG. 1 the beam **7b** FIG. 1 has an annular transversal distribution with mixed spatially variable polarization **10c** FIG. 7C that comprises regions of linear elliptical and circular polarization; then the beam propagates through the SPP **4** FIG. 1 and the PR **5** FIG. 1, after which the polarization state changes to the mixed spatially variable polarization **10d** FIG. 7D as the PR rotates linear polarization and elliptical polarization clockwise by 45° but does not change circular polarization; finally, the beam **7b** with annular transversal distribution and mixed polarization state is focused using the lens **6** FIG. 1, resulting in a convergent annular beam **7c** FIG. 1, achieving the final polarization state **10e** FIG. 7E and the transversal distribution FIG. 7F that is circularly non-symmetric, two-lobes in shape at the focusing point.

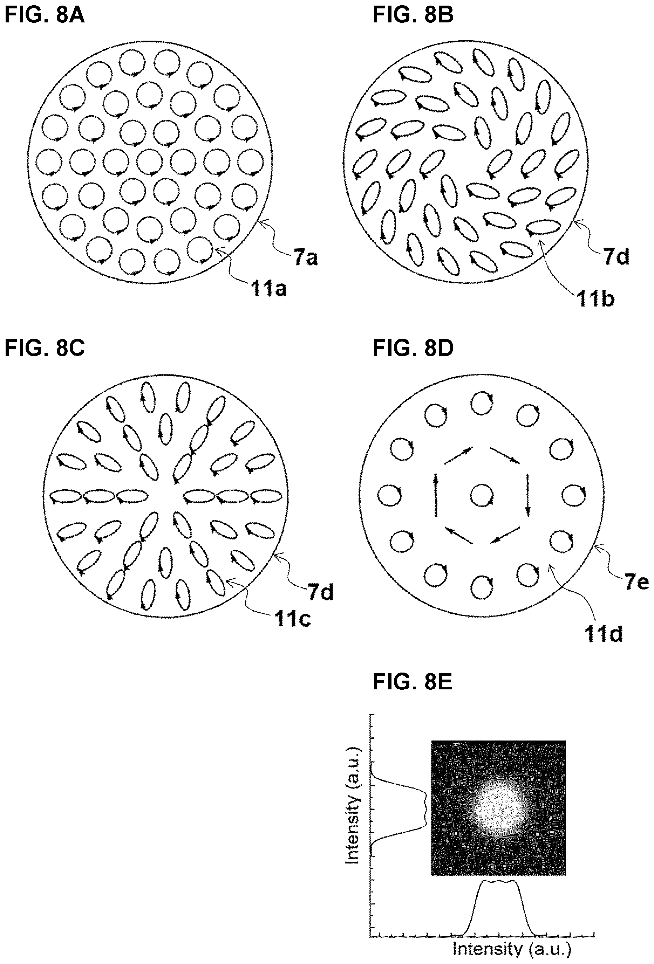

According to the Second Embodiment of the present invention, the incident beam **7a** FIG. 2, with linear polarization **9a** FIG. 5A and Gaussian transversal distribution FIG. 5B passes through the QWP **1** FIG. 2 that changes its polarization state into left circular polarization **11a** FIG. 8A; next, the beam passes through the MC **3b** FIG. 2 that changes the transversal distribution, resulting in the beam **7d** FIG. 2 with annular transversal distribution, and modifies the circular polarization into an elliptical polarization with the major semi-axis rotated 45° counter-clockwise with respect to the radial direction **11b** FIG. 8B; the PR **5** FIG. 2 rotates the major semi-axis of the polarization ellipse by 45° clockwise resulting in a beam **11c** FIG. 8C; the aspherical lens **6** FIG. 2 focuses the beam **7e,** FIG. 2, and the polarization state at the focusing point **11d** FIG. 8D contains regions with elliptical polarization and linear polarization, the transversal distribution is uniform with circular symmetry (top-hat) FIG. 8E.

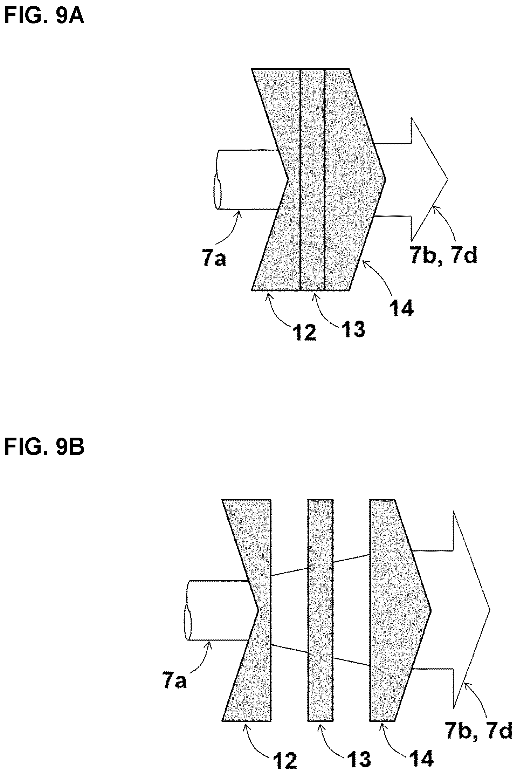

The Mode Converter MC can be made of a single uniaxial crystal **3a, 3b** FIG. 3. As an alternative solution, the MC can be realized from three distinct components, a diverging axicon **12** FIG. 9A, a uniaxial crystal with plane-parallel interfaces **13** FIG. 9A aligned with the axis of anisotropy parallel to the optical axis, and a converging axicon **14** Fig. 9A, these three components being, in a first version, joined together FIG. 9A, or positioned at a certain distance from each other FIG. 9B. The diverging axicon **12,** characterized by the refractive index $n$ and the angle $\alpha'$ of the conical surface, generate a divergent bundle of rays, which inside the axicon have the tilt $\beta_{in}$ with respect to the optical axis; in air, after refraction from the plane surface of the axicon, have the tilt $\beta_{air}$; and inside the uniaxial crystal **13,** after the refraction through its first surface, have the tilt $\beta'$. These angles can be determined by solving the equations that result from applying the law of refraction at each interface, namely equations (8) and (9).

$$\sin \alpha' = n \sin (\alpha' \text{-} \beta_{in}) \qquad (8)$$

$$n \sin \beta_{in} = \sin \beta_{air} = n_o \sin \beta' \qquad (9)$$

The axicon lenses **12** and **14** fulfill the role of imposing the conical wave-front necessary for the mode conversion, respectively collimation of the beam. One option to ensure that the output beam is collimated is to choose the refractive index (material) and the angle of the conical surface of the converging axicon **14** the same as for the diverging axicon **12.** The uniaxial crystal **13** introduces the phase difference $\varphi'$ between the extraordinary and the ordinary waves that is given by the equation (10).

$$\varphi' = \frac{2\pi}{\lambda} \frac{L'(n_e^{eff} \text{-} n_o)}{\cos \beta'} \qquad (10)$$

The thickness of the uniaxial crystal is denoted by $L'$. This version of a MC tuned for $\varphi' = \text{-}\pi/2$ will contribute to the generation of a beam having zero intensity on the optical axis in the focal point if it would replace the MC **3a** in the optical system figured in FIG. 1. In the same way, this version of a MC tuned for $\varphi' = \text{-}0.764\pi$ will contribute to the generation of a beam with a top-hat distribution delivered in the focal point if it would replace the MC **3b** in the optical system shown in FIG. 2.

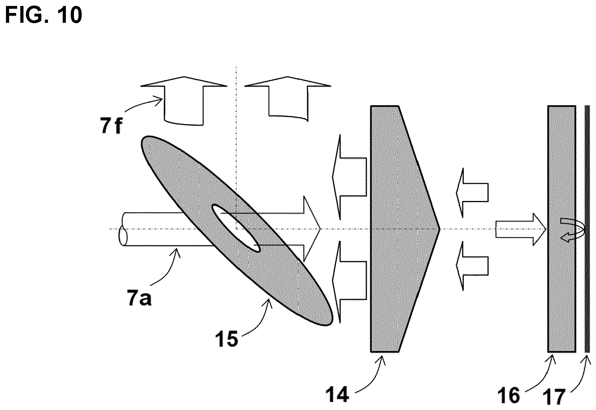

FIG. 10 illustrates a different version of a MC, which consists of a flat mirror with a hole in the middle **15,** a converging axicon **14,** characterized by the refractive index $n$ and the angle $\alpha'$ of the conical surface, a uniaxial crystal **16** of thickness $L''$, having plane-parallel interfaces and being aligned with its anisotropy axis parallel to the optical axis, and a flat high reflectivity mirror **17** that can be placed in contact with, or at a certain distance from the uniaxial crystal. An incident beam **7a** with Gaussian transversal distribution passes through mirror **15;** the axicon **14** impose a convergent conical wavefront and the beam becomes annular in shape with a divergent conical wavefront as it propagates; the uniaxial crystal **16** changes the polarization state of the beam, thus realizing the mode conversion; mirror **17** reflects the beam along the same path into the system; the beam crosses again the crystal **16** and propagates to the axicon **14** that collimates the beam, then is reflected by mirror **15,** resulting in the beam **7f.** Note that during the propagation between the crystal **16** and the axicon **14** the beam, being divergent, acquires the necessary spatial extension to hit the exterior region of the mirror **15,** thus being reflected. The influence on the polarization state of the beam is determined by the phase difference $\varphi''$ induced by the crystal. This version of a MC tuned for $\varphi'' = \text{-}\pi/2$ is equivalent to MC **3a** while tuned for $\varphi'' = \text{-}0.764\pi$ is equivalent to MC **3b.** The expression of $\varphi''$ is given in equation (11).

$$\varphi'' = \frac{2\pi}{\lambda}\ \frac{L''(n_e^{eff}-n_o)}{2\cos\beta'} \tag{11}$$

## Claims

1. An optical element, called Mode Converter (MC), consisting of a birefringent uniaxial crystal having a cylindrical shape, with the anisotropy axis aligned parallel to its axis of symmetry, **characterized in that** the input transparent surface is conical and is recessed inward to the cylindrical shape (away from the incident light) and the output transparent surface is also conical and is bulging outward from the cylindrical shape;
and
the MC can be a monolithic single-component type **3a, 3b** or consisting of three distinct elements, a diverging axicon **12,** a uniaxial crystal **13** with plane-parallel surfaces that has the anisotropy axis parallel to the optical axis, and a converging axicon **14,** these three elements being positioned in direct contact or at a distance from each other;
and
**characterized by** the fact that MC transforms an incident beam of Gaussian transversal distribution **7a** into the annular beam **7b** or **7d,** and determine a change in the polarization state of the incoming beam.

2. An optical system with the function of a MC, consisting of a flat mirror with a hole in the middle (i.e., annular flat mirror), a converging axicon, a uniaxial crystal with plane-parallel surfaces, which is aligned with the anisotropy axis parallel to the optical axis, and a flat mirror with 100% reflectivity for the beam, **characterized in that** a beam **7a** with Gaussian transversal distribution passes through the annular flat mirror **15;** that the beam passes through the converging axicon **14,** which imposes a conical wavefront; that the beam propagates through the uniaxial crystal **16,** then it is reflected by the flat mirror **17** and then passes again through the uniaxial crystal **16,** which will induce the beam a polarization state that is either **9d, 10c,** or **11b** depending on the initial polarization state of the beam and the thickness of the crystal **16;** that the beam propagates to the axicon **14** that collimates the beam; that the beam is reflected away from the system by the annular flat mirror **15.**

3. An optical system consisting of a Quarter Waveplate QWP element, a Half Waveplate HWP element, a MC element realized either according to the claim 1 or according to the claim 2, a Spiral Phase Plate SPP element with the topological charge $m= -1$, a Polarization Rotator PR element, and a focusing element, **characterized in that** a beam **7a** with Gaussian transversal distribution and linear polarization passes through the QWP **1** that changes the polarization into circular polarization; that the beam propagates through the HWP **2** that changes the direction of polarization rotation; that the beam passes through the MC **3a** that changes its transversal distribution into the annular distribution **7b** and changes its polarization into a linear polarization with a spatially variable direction of polarization **9d** having the orientation rotated by 45° counter-clockwise with respect to the radial direction; that the beam propagates through the SPP **4** that introduces an optical path difference that changes with the azimuthal angle around the optical axis without influencing its polarization state; that after passing through the PR **5** the beam has the radial polarization state **9e;** that the beam passes through the focusing element **6;**
and
as a consequence of the polarization changes induced by the system, at the focusing point, the beam has a doughnut-like transversal distribution and the mixed spatially variable polarization state **9f.**

4. An optical system consisting of a Quarter Waveplate QWP element, a Half Waveplate HWP element, a MC element realized either according to the claim 1 or according to the claim 2, a Spiral Phase Plate SPP element with topological charge $m= -1$, a Polarization Rotator PR element, and a focusing element, **characterized in that** a beam **7a** with Gaussian transversal distribution and linear polarization passes through the QWP **1** that does not change the polarization state of the beam because its fast axis matches the initial direction of polarization; that the beam passes through the HWP **2** that rotates the polarization direction by 90°; that the beam propagates through the MC **3a** that changes its transversal distribution into the annular distribution **7b** and modifies its polarization state to the spatially variable mixed polarization **10c;** that the beam propagates through the SPP **4** that introduces an optical path difference that changes with the azimuthal angle around the optical axis without changing its polarization state; that after passing through the PR **5** the beam, having the mixed spatially variable polarization state **10d** is focused using the focusing element **6;**
and
as a consequence of the polarization changes induced by the system, at the focusing point, the beam presents a circularly non-symmetric, two-lobes in shape transversal distribution, with low intensity along one direction and a higher intensity along the perpendicular direction.

5. An optical system consisting of a Quarter Waveplate QWP element, a MC element realized either according to the claim 1 or according to the claim 2, a Polarization Rotator PR element, and a focusing element, **characterized in that** an initial beam **7a** with Gaussian transversal distribution and linear polarization passes through the QWP **1** that changes its polarization state into circular polarization; that the beam passes through the MC **3b** that transforms the initial Gaussian transversal distribution of the beam into the annular distribution **7d** and polarization state into the elliptical polarization state **11b** with the major semi-axis rotated 45° counter-clockwise with respect to the radial direction; that the beam passes through the PR **5** that rotates the major semi-axis of the polarization ellipse by 45° clockwise; that the beam is focused using the focusing element **6;**
and
as a consequence of the polarization changes induced by the system the beam transversal distribution at the focusing point is uniform with circular symmetry (top-hat distribution).

FIG. 1

FIG. 2

## FIG. 3

**7a**

**7b, 7d**

**3a, 3b**

## FIG. 4

$$\frac{\lambda m}{n-1}$$

**7b, 7d**

**7b, 7d**

**4**

FIG. 5A

FIG. 5B

FIG. 6A

FIG. 6B

FIG. 6C

FIG. 6D

FIG. 6E

FIG. 6F

**FIG. 7A**

7a

10a

**FIG. 7B**

7a

10b

**FIG. 7C**

7b

10c

**FIG. 7D**

7b

10d

**FIG. 7E**

7c

10e

**FIG. 7F**

Intensity (a.u.)

Intensity (a.u.)

## FIG. 8A

7a
11a

## FIG. 8B

7d
11b

## FIG. 8C

7d
11c

## FIG. 8D

7e
11d

## FIG. 8E

Intensity (a.u.)

Intensity (a.u.)

## FIG. 9A

7a    7b, 7d    14    12    13

## FIG. 9B

7a    12    13    14    7b, 7d

**FIG. 10**

Europäisches
Patentamt

European
Patent Office

Office européen
des brevets

**EUROPEAN SEARCH REPORT**

Application Number

EP 20 02 0478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LOUSSERT C ET AL: "Efficient scalar and vectorial singular beam shaping using homogeneous anisotropic media", OPTICS LETTERS, OPTICAL SOCIETY OF AMERICA, US, vol. 35, no. 1, 18 December 2009 (2009-12-18), pages 7-9, XP001551095, ISSN: 0146-9592, DOI: 10.1364/OL.35.000007 * page 8, left hand column, line 8 - 30; page 8; figures 1c,3a,4a * * page 9, last paragraph * | 1-5 | INV. G02B27/09 G02B27/58 ADD. G02B5/04 G02B21/16 |
| A | KURILKINA S N ET AL: "Transformation of high-order Bessel vortices in one-dimensional photonic crystals", JOURNAL OF OPTICS, INSTITUTE OF PHYSICS PUBLISHING, BRISTOL GB, vol. 12, no. 1, 25 November 2009 (2009-11-25), page 15704, XP020170949, ISSN: 2040-8986 * abstract; figures 3,8 * | 1-5 | |
| A | US 2014/347723 A1 (RAFAILOV EDIK U [GB] ET AL) 27 November 2014 (2014-11-27) * paragraphs [0036], [0037]; figures 1a,1b * | 1-5 | TECHNICAL FIELDS SEARCHED (IPC) G02B |

The present search report has been drawn up for all claims

| Place of search | Date of completion of the search | Examiner |
|---|---|---|
| Munich | 17 February 2021 | Blau, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 02 0478

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2021

| Patent document cited in search report | Publication date | Patent family member(s) | Publication date |
|---|---|---|---|
| US 2014347723 A1 | 27-11-2014 | EP 2791728 A1<br>US 2014347723 A1<br>WO 2013088106 A1 | 22-10-2014<br>27-11-2014<br>20-06-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5731588 A
- US 7961371 B2
- US 3476463 A
- US 10156669 B2

**Non-patent literature cited in the description**

- **B. HARKE et al.** Resolution scaling in STED microscopy. *Optics Express,* 2008, vol. 16 (6), 4154-4162
- **K. SUEDA et al.** Laguerre-Gaussian beam generated with a multilevel spiral phase plate for high intensity laser pulses. *Optics Express,* 2004, vol. 12 (15), 3548-3553
- **J. C. QUICENO-MORENO et al.** Analysis of hybrid vector beams generated with a detuned Q-plate. *Applied Sciences,* 2020, vol. 10 (10), 3427
- **G. RAČIUKAITIS et al.** Laser processing by using diffractive optical laser beam shaping technique. *Journal of Laser Micro/ Nanoengineering,* 2011, vol. 6 (1), 37-43
- **C. HNATOVSKY et al.** The role of light-induced nanostructures in femtosecond laser micromachining with vector and scalar pulses. *Optics Express,* 2013, vol. 21 (10), 12651-12656
- **Y. KOZAWA ; S. SATO.** Generation of a radially polarized laser beam by use of a conical Brewster prism. *Optics Letters,* 2005, vol. 30 (22), 3063-3065
- **G. MACHAVARIANI et al.** Efficient extracavity generation of radially and azimuthally polarized beams. *Optics Letters,* 2007, vol. 32 (11), 1468-1470
- **V. G. SHVEDOV et al.** Efficient beam converter for the generation of high-power femtosecond vortices. *Optics Letters,* 2010, vol. 35 (15), 2660-2662
- **C. LOUSSERT ; E. BRASSELET.** ient scalar and vectorial singular beam shaping using homogeneous anisotropic media. *Optics Letters,* 2010, vol. 35 (1), 7-9
- **W. HAN et al.** Flattop focusing with full Poincare beams under low numerical aperture illumination. *Optics Letters,* 2011, vol. 36 (9), 1605-1607
- **S. LIU et al.** Highly efficient generation of arbitrary vector beams with tunable polarization, phase, and amplitude. *Photonics Research,* 2018, vol. 6 (4), 228-233
- **K. S. YOUNGWORTH ; T. G. BROWN.** Focusing of high numerical aperture cylindrical-vector beams. *Optics Express,* 2000, vol. 7 (2), 77-87